# EUROPEAN PATENT APPLICATION

(11) **EP 4 763 329 A1**
(43) Date of publication of application: **24.06.2026**
(21) Application number: 24853266.5
(22) Date of filing: 11.05.2024
(51) Int. Cl.: B01J 23/02

(54) **MODIFIED ALUMINUM OXIDE MATERIAL FOR TAIL GAS TREATMENT, PREPARATION METHOD AND THREE-WAY CATALYST**

(30) Priority: 16.08.2023 CN 202311032836
(71) Applicant: Dongfeng Motor Group Co., Ltd., Wuhan, Hubei 430056 (CN)
(72) Inventor: XIONG, Fen, Wuhan, Hubei 430056 (CN); ZHAO, Haoyuan, Wuhan, Hubei 430056 (CN); LIU, Dandan, Wuhan, Hubei 430056 (CN); CHEN, Chao, Wuhan, Hubei 430056 (CN); WU, Xu, Wuhan, Hubei 430056 (CN)
(74) Representative: Gille Hrabal Partnerschaftsgesellschaft mbB Patentanwälte
(86) International application number: PCT/CN2024/092563
(87) International publication number: WO 2025/035850

(57) **Abstract**

The present application relates to a modified aluminum oxide material for tail gas treatment, a preparation method and a three-way catalyst. The method comprises: performing primary growth on aluminum oxide to obtain an activated aluminum oxide pre-structure MgO-BaO-Al₂O₃; and performing secondary growth on the activated aluminum oxide pre-structure MgO-BaO-Al₂O₃ to obtain the modified aluminum oxide material SiO₂-MgO-BaO-Al₂O₃ for tail gas treatment, wherein the molar ratio of Si to Mg in the modified aluminum oxide material SiO₂-MgO-BaO-Al₂O₃ for tail gas treatment is (3~7.5):1. The present application can improve the specific surface area and the high-temperature resistance of the aluminum oxide material, and inhibit a phase transformation process of γ-Al₂O₃ material at a high temperature, thereby improving the high-temperature aging resistance of the aluminum oxide material, and also improving the anti-falling performance of the aluminum oxide material as a coating material.

## Description

### Field of the Invention

The present application relates to the field of tail gas treatment, and in particular to a modified aluminum oxide material for tail gas treatment, a preparation method, and a three-way catalyst.

### Background of the Invention

With the annual number of automobiles increasing year by year, tail gas emissions from automobiles have become one of the main sources of air pollution. An automobile tail gas purification catalyst is a primary strategy for converting pollutants such as carbon monoxide, hydrocarbons, and nitrogen oxides into non-toxic gases such as carbon dioxide and water vapor. The automobile tail gas purification catalyst generally comprises a honeycomb carrier and a catalytic coating layer, wherein the catalytic coating mainly consists of catalyst materials, such as rare earth oxides and aluminum oxide, as well as noble metal active components. The aluminum oxide material therein serves to disperse the noble metal active components and to increase the specific surface area. The aluminum oxide material exists in a plurality of crystal forms, including α, β, γ, δ, η, and θ, among which γ-Al₂O₃ is the most widely used in the automobile tail gas purification catalyst. γ-Al₂O₃, also known as activated aluminum oxide, is a porous, highly dispersed solid material with a high specific surface area, excellent thermal stability, and adsorption properties. It is generally considered to have a defective spinel structure, in which oxygen and aluminum atoms occupy octahedral and tetrahedral sites, respectively, and trivalent aluminum ions form the defects and acidity of the spinel. γ-Al₂O₃ is a metastable structure. During automobile operation, the instantaneous temperature of tail gas can sometimes exceed 1000°C. γ-Al₂O₃ (cubic) gradually transforms into δ-A1₂O₃ (tetragonal) and θ-Al₂O₃ (monoclinic) as the temperature rises, and eventually converts into α-Al₂O₃ (hexagonal). This transformation leads to a sharp decrease in the specific surface area of the aluminum oxide material, causing aggregation of the dispersed active components and thereby resulting in a dramatic reduction in catalyst activity. Therefore, increasing the specific surface area and thermal stability of the aluminum oxide material is crucial for improving the performance of the automobile tail gas purification catalyst.

Rare earth oxygen storage materials and noble metal active components need to be dispersed onto cordierite, metal, or other carriers through coating with the aluminum oxide material. During automobile operation, mechanical impacts such as vibrations are unavoidable, and the tail gas treatment device experiences high- and low-temperature thermal shocks. This requires the aluminum oxide material to have good anti-shedding performance under both mechanical and thermal shock conditions.

At present, γ-Al₂O₃ is typically prepared by dehydration of boehmite or pseudo-boehmite precursors (AlOOH) at 500-600°C. Extensive studies have been conducted on the aluminum oxide and on improving its thermal stability, mainly focusing on improving preparation methods and modifying the aluminum oxide through introducing different metal elements. Alkaline earth and rare earth elements can alter the thermal stability of the aluminum oxide to a certain extent. CN100484621 C discloses a preparation method for a modified aluminum oxide having high-temperature resistance and a large specific surface area, in which structural modification of the aluminum oxide material is performed through adding nitrates of alkali metals, alkaline earth metals, and rare earth elements, as well as tetraethyl orthosilicate. CN109772289A discloses a preparation method for lanthanum-modified aluminum oxide, in which the size and pore volume of the aluminum oxide are regulated through adding NaBr, and the aluminum oxide material is modified through adding lanthanum nitrate as a lanthanum source and polyethylene glycol as a dispersant, and the fresh sample has a specific surface area of 200-250 m²/g, which decreases to 160-200 m²/g after calcination at 1000°C for 12 hours. CN103599768A discloses a preparation method for a modified aluminum oxide material, in which the crystal structure of γ-Al₂O₃ is stabilized through adding lanthanum oxide and zirconium oxide, and the material has a specific surface area of 237 m²/g in the fresh state, which decreases to 59 m²/g after calcination at 1200°C for 4 hours. CN113233484A discloses a preparation method for high-temperature resistant, high specific surface area activated aluminum oxide, in which the activated aluminum oxide material is prepared through introducing cerium nitrate, lanthanum nitrate, and barium hydroxide as structure stabilizers, and ammonium bicarbonate as a surface modifier, using a low-temperature solid-state precursor method combined with freeze-drying, and the fresh sample has a specific surface area of approximately 300 m²/g, which remains 110 m²/g after aging at 1100°C for 4 hours. CN102962047A discloses a cerium-zirconium-aluminum composite oxide catalytic material and a preparation method thereof, in which cerium- and zirconium-doped activated aluminum oxide is prepared by the precipitation method, and after calcination at 1000°C for 4 hours, the maximum specific surface area can reach 145 m²/g. In the study Research on the Preparation of Modified Activated Alumina by the Impregnation Method, phosphorus-modified alumina prepared by an incipient wetness impregnation method exhibits a specific surface area of 75.69 m²/g after calcination at 1200 °C for 3 hours.

In view of the current industrial application status of γ-Al₂O₃ and a systematic analysis of the above studies, the most commonly used material at present is γ-Al₂O₃ modified with lanthanum and other rare earth elements. With the continuous tightening of emission regulations and the increasing proportion of hybrid vehicles, the heat resistance and anti-shedding of γ-Al₂O₃ materials still need to be further improved. For γ-Al₂O₃ materials modified with non-rare-earth elements, such as through introducing a silicon source, the processes usually involve various organic solvents, complex process routes, and stringent drying conditions, making large-scale industrial production difficult. In addition, there are relatively few studies at present on the anti-shedding of aluminum oxide materials.

Therefore, there is an urgent need to develop an aluminum oxide material having high-temperature resistance, a high specific surface area, and excellent anti-shedding performance.

### Summary of the Invention

The present application provides a modified aluminum oxide material for tail gas treatment, a preparation method and a three-way catalyst, which can improve the specific surface area and the high-temperature resistance of the aluminum oxide material, and inhibit a phase transformation process of γ-Al₂O₃ material at a high temperature, thereby improving the high-temperature aging resistance of the aluminum oxide material, and also improving the anti-shedding of the aluminum oxide material as a coating material.

In a first aspect, a preparation method of a modified aluminum oxide material for tail gas treatment is provided, which comprises:
performing primary growth on aluminum oxide to obtain an activated aluminum oxide pre-structure MgO-BaO-Al₂O₃; and
performing secondary growth on the activated aluminum oxide pre-structure MgO-BaO-Al₂O₃ to obtain a modified aluminum oxide material SiO₂-MgO-BaO-Al₂O₃ for tail gas treatment, wherein a molar ratio of Si to Mg in the modified aluminum oxide material SiO₂-MgO-BaO-Al₂O₃ for tail gas treatment is (3~7.5):1.

In some embodiments, in the activated aluminum oxide pre-structure MgO-BaO-Al₂O₃, the content of MgO is 0.2-4.0 wt%, the content of BaO is 0.5-5.0 wt%, and Al₂O₃ accounts for 5-30 wt% of the total weight of Al₂O₃ in the modified aluminum oxide material SiO₂-MgO-BaO-Al₂O₃ for tail gas treatment.

In some embodiments, the step of performing primary growth on the aluminum oxide to obtain the activated aluminum oxide pre-structure MgO-BaO-Al₂O₃ specifically comprises the following steps:
dissolving a soluble aluminum salt, a soluble magnesium salt, a soluble barium salt and a soluble ammonium salt in a first solvent to prepare a solution A1;
adding an alkaline solution to the solution A1 dropwise to adjust a pH of the solution A1 to 7-8, stirring uniformly, and performing a first aging treatment on the mixture to obtain a slurry A2; and
performing a low-temperature calcination treatment on the slurry A2 and grinding to obtain the activated aluminum oxide pre-structure MgO-BaO-Al₂O₃.

In some embodiments, the amounts of the soluble aluminum salt, the soluble magnesium salt and the soluble barium salt added are as follows:
the molar ratio of Al³⁺, Mg²⁺ and Ba²⁺ is Al³⁺:Mg²⁺:Ba²⁺ = (90~95):(0.2~5):(0.1~2).

In some embodiments, the soluble aluminum salt comprises one or more of aluminum nitrate, aluminum sulfate and aluminum chloride;
the soluble magnesium salt comprises one or more of magnesium nitrate, magnesium sulfate, magnesium acetate and magnesium chloride;
the soluble barium salt comprises one or more of barium nitrate, barium acetate and barium chloride;
the soluble ammonium salt comprises ammonium sulfate and/or ammonium nitrate; and
the alkaline solution comprises aqueous ammonia and/or ammonium carbonate.

In some embodiments, the first aging treatment comprises aging at 20-30°C for 2-4 hours.

In some embodiments, the low-temperature calcination treatment comprises calcining at 350-420°C for 1-3 hours.

In some embodiments, before the step of performing the low-temperature calcination treatment on the slurry A2, the method further comprises drying the slurry A2 at 60-100°C.

In some embodiments, drying is performed in a spraying manner at 60-100°C.

In some embodiments, grinding is performed until a particle size D₉₀ of 5-15 µm is achieved.

In some embodiments, the step of performing secondary growth on the activated aluminum oxide pre-structure MgO-BaO-Al₂O₃ to obtain the modified aluminum oxide material SiO₂-MgO-BaO-Al₂O₃ for tail gas treatment specifically comprises the following steps:
adding the activated aluminum oxide pre-structure MgO-BaO-Al₂O₃ to aqueous ammonia and mixing uniformly to obtain a solution B1;
dissolving pseudo-boehmite powder and polyether-modified siloxane in a second solvent, adding nitric acid, performing ball milling on the mixture, and then adding additional second solvent to obtain a solution B2;
heating the solution B1 to 70-90°C, while stirring, adding the solution B2 and an alkaline solution simultaneously to adjust a pH to 8-9, stirring uniformly, and performing a second aging treatment on the mixture to obtain a slurry B3;
performing a first high-temperature calcination treatment on the slurry B3 under a preset gas flow rate; and
performing a second high-temperature calcination treatment to obtain the modified aluminum oxide material SiO₂-MgO-BaO-Al₂O₃ for tail gas treatment.

In some embodiments, the mass fraction of the aqueous ammonia is 5~10 wt%; and
the polyether-modified siloxane is one or more of polyether-modified polydimethylsiloxane, polyether-modified trisiloxane, and polyether-modified heptamethylsiloxane.

In some embodiments, when the activated aluminum oxide pre-structure MgO-BaO-Al₂O₃ is added to the aqueous ammonia, one or more of hydroxyethyl polyacrylate, hydroxypropyl methylcellulose, hydroxypropyl cellulose and polyvinyl alcohol are also added.

In some embodiments, the solution B2 is added while stirring under ultrasonic dispersion conditions.

In some embodiments, before the step of performing the first high-temperature calcination treatment on the slurry B3, the method further comprises drying the slurry B3 at 100-120°C.

In some embodiments, the second aging treatment comprises aging at 40-60°C for 3-5 hours.

In some embodiments, the first high-temperature calcination treatment comprises calcining at 300-500°C for 1-2 hours.

In some embodiments, the second high-temperature calcination treatment comprises calcining at 600-800°C for 2-5 hours.

In some embodiments, the preset gas flow rate is 50-250 L/min.

In a second aspect, a modified aluminum oxide material for tail gas treatment is provided, which is prepared by the preparation method of the modified aluminum oxide material for tail gas treatment according to any one of the foregoing methods.

In a third aspect, a three-way catalyst is provided, which comprises the modified aluminum oxide material for tail gas treatment as described above.

The beneficial effects brought by the technical solution provided in the present application comprise:
The embodiment of the present application provides a modified aluminum oxide material for tail gas treatment, a preparation method, and a three-way catalyst, in order to improve the high-temperature resistance and specific surface area of the activated aluminum oxide material, the current main strategy is to form a porous structure with a high specific surface area during the material preparation and shaping process, while inhibiting the phase transition of the aluminum oxide material under high-temperature conditions and preventing sintering between aluminum oxide particles. At present, the most commonly used approach is modification by doping with rare earth oxides (such as La₂O₃), and there are also reports of auxiliary modification by doping with alkaline earth metal oxides and silicon dioxide. These doping techniques generally involve one or more metal salts, oxides, or the like, which are used to directly modify the aluminum oxide through methods such as co-precipitation and sol-gel, and the specific surface area and high-temperature resistance of the resulting material still need to be further improved. The present application has found through extensive research that through first preparing an activated aluminum oxide pre-structure modified with Mg and Ba, i.e., MgO-BaO-Al₂O₃, and then growing a Si-modified activated aluminum oxide structure on this pre-structure (secondary growth), controlling the molar ratio of Si to Mg at (3~7.5):1, a modified aluminum oxide material having high-temperature resistance and a high specific surface area can be obtained even without doping with rare earth oxides. It is also unexpectedly found that the modified aluminum oxide material prepared by this method, when made into a slurry and coated onto a ceramic carrier, can significantly improve the anti-shedding performance of the coating layer in the three-way catalyst.

### Brief Description of the Drawings

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.
Fig. 1 is a flow chart of a preparation method of a modified aluminum oxide material for tail gas treatment in the embodiment of the present application;
Fig. 2 is a flow chart of obtaining an activated aluminum oxide pre-structure in the embodiment of the present application;
Fig. 3 is a flow chart of performing secondary growth on an activated aluminum oxide pre-structure to obtain a modified aluminum oxide material for tail gas treatment provided in the embodiment of the present application.

### Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by those of ordinary skill in the art without inventive efforts shall fall within the protection scope of the present application.

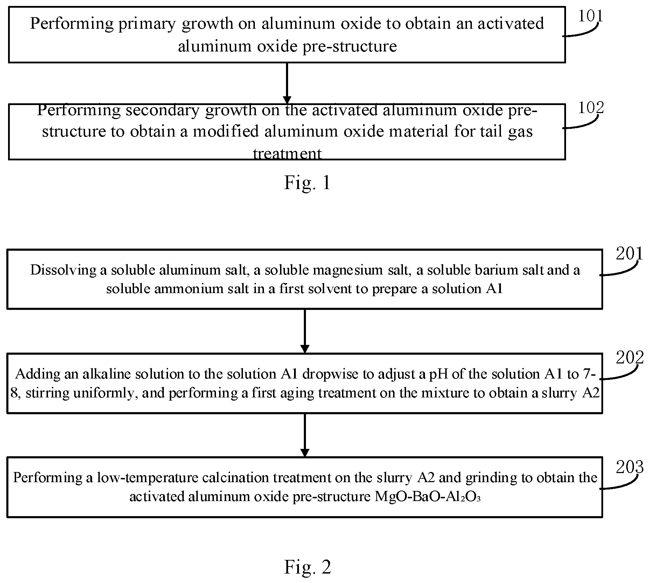

As shown in Fig. 1, the embodiment of the present application provides a preparation method of a modified aluminum oxide material for tail gas treatment, which comprises the following steps:
S101: Primary growth is performed on aluminum oxide to obtain an activated aluminum oxide pre-structure MgO-BaO-Al₂O₃.
S102: Secondary growth is performed on the activated aluminum oxide pre-structure MgO-BaO-Al₂O₃ to obtain a modified aluminum oxide material SiO₂-MgO-BaO-Al₂O₃ for tail gas treatment, wherein a molar ratio of Si to Mg in the modified aluminum oxide material SiO₂-MgO-BaO-Al₂O₃ for tail gas treatment is (3~7.5):1.

Excessive SiO₂ forms a dense glassy phase, while insufficient SiO₂ cannot effectively inhibit the high-temperature aging phase transition of the aluminum oxide material. Therefore, after extensive experimental studies, the molar ratio of Si to Mg is determined to be (3~7.5):1. At this ratio, the adhesion between the aluminum oxide material and the ceramic carrier is improved, enhancing the anti-shedding performance of the coating layer, while also increasing the specific surface area.

In order to improve the high-temperature resistance and specific surface area of the activated aluminum oxide material, the current main strategy is to form a porous structure with a high specific surface area during the material preparation and shaping process, while inhibiting the phase transition of the aluminum oxide material under high-temperature conditions and preventing sintering between aluminum oxide particles. At present, the most commonly used approach is modification by doping with rare earth oxides (such as La₂O₃), and there are also reports of auxiliary modification by doping with alkaline earth metal oxides and silicon dioxide. These doping techniques generally involve one or more metal salts, oxides, or the like, which are used to directly modify the aluminum oxide through methods such as co-precipitation and sol-gel, and the specific surface area and high-temperature resistance still need to be further improved. The present application has found through extensive research that through first preparing an activated aluminum oxide pre-structure modified with Mg and Ba, i.e., MgO-BaO-Al₂O₃, and then growing a Si-modified activated aluminum oxide structure on this pre-structure (secondary growth), controlling the molar ratio of Si to Mg at (3~7.5):1, a modified aluminum oxide material having high-temperature resistance and a high specific surface area can be obtained even without doping with rare earth oxides. It is also unexpectedly found that the modified aluminum oxide material prepared by this method, when made into a slurry and coated onto a ceramic carrier, can significantly improve the anti-shedding performance of the coating layer in the three-way catalyst.

In the activated aluminum oxide pre-structure MgO-BaO-Al₂O₃, the content of MgO is 0.2-4.0 wt%, the content of BaO is 0.5-5.0 wt%, and Al₂O₃ in the activated aluminum oxide pre-structure accounts for 5-30 wt% of the total weight of Al₂O₃ in the modified aluminum oxide material SiO₂-MgO-BaO-Al₂O₃ for tail gas treatment.

As shown in Fig. 2, in order to prepare the activated aluminum oxide pre-structure in S101, the primary growth is performed on the aluminum oxide to obtain the activated aluminum oxide pre-structure MgO-BaO-Al₂O₃, which specifically comprises the following steps:
S201: A soluble aluminum salt, a soluble magnesium salt, a soluble barium salt and a soluble ammonium salt are dissolved in a first solvent to prepare a solution A1.

In S201, the amounts of the soluble aluminum salt, the soluble magnesium salt, and the soluble barium salt added can be determined according to the molar ratio of Al³⁺, Mg²⁺, and Ba²⁺ in the corresponding soluble salts. For example, the amounts of the soluble aluminum salt, the soluble magnesium salt, and the soluble barium salt added are as follows: the molar ratio of Al³⁺ in the soluble aluminum salt, Mg²⁺ in the soluble magnesium salt, and Ba²⁺ in the soluble barium salt is Al³⁺:Mg²⁺:Ba²⁺ = (90~95):(0.2~5):(0.1~2).

The function of the soluble ammonium salt is to gradually decompose into gases during the calcination process, which helps form a porous structure with a high specific surface area. Therefore, the soluble ammonium salt can be added according to actual preparation requirements.

It should be noted that there are a plurality of options for the soluble aluminum salt, which can be selected according to actual preparation requirements. For example, as an illustration, the soluble aluminum salt comprises one or more of aluminum nitrate, aluminum sulfate, and aluminum chloride.

It should be noted that there are a plurality of options for the soluble magnesium salt, which can be selected according to actual preparation requirements. For example, as an illustration, the soluble magnesium salt comprises one or more of magnesium nitrate, magnesium sulfate, magnesium acetate, and magnesium chloride.

It should be noted that there are a plurality of options for the soluble barium salt, which can be selected according to actual preparation requirements. For example, as an illustration, the soluble barium salt comprises one or more of barium nitrate, barium acetate, and barium chloride.

It should be noted that there are a plurality of options for the soluble ammonium salt, which can be selected according to actual preparation requirements. For example, as an illustration, the soluble ammonium salt comprises one or more of ammonium nitrate and ammonium sulfate.

It should be noted that the function of the first solvent is to dissolve and uniformly mix the various soluble salts. There are a plurality of options for the first solvent, which can be selected according to actual preparation requirements. For example, as an illustration, the first solvent comprises one or more of deionized water and distilled water.

S202: An alkaline solution is added to the solution A1 dropwise to adjust a pH of the solution A1 to 7-8, the mixture is stirred uniformly, and a first aging treatment is performed to obtain a slurry A2.

The first aging treatment comprises aging at 20-30°C for 2-4 hours.

The alkaline solution comprises aqueous ammonia and/or ammonium carbonate.

S203: After the slurry A2 is dried at 60-100°C, a low-temperature calcination treatment is performed, and the material is then ground to a particle size of D₉₀ = 5-15 µm to obtain the activated aluminum oxide pre-structure MgO-BaO-Al₂O₃.

The low-temperature calcination treatment comprises calcining at 350-420°C for 1-3 hours.

The slurry A2 is preferably dried in a spray-drying manner.

In order to prepare the activated aluminum oxide pre-structure with a suitable structure, the aluminum oxide is doped and modified through adding a magnesium salt, a barium salt, and a soluble ammonium salt in appropriate proportions. The doped magnesium and barium can form highly thermally stable aluminates with the aluminum oxide during the high-temperature solid-state reaction and disperse in the aluminum oxide material, thereby inhibiting bulk diffusion and the γ→δ→α phase transition of the aluminum oxide under high-temperature conditions, and thus improving the aging resistance and high-temperature resistance of the activated aluminum oxide. The added soluble ammonium salt decomposes near the calcination temperature to release gases such as ammonia (if the ammonium sulfate is used, the ammonia and ammonium bisulfate are generated; if the ammonium nitrate is used, ammonia and nitrogen are generated, etc.). The diffusion of the ammonia in the system can promote the formation of a porous structure in the activated aluminum oxide pre-structure, thereby increasing the specific surface area of the material. Since it is necessary to match the secondary growth process, some process parameters in this preparation are also controlled differently from conventional preparation methods. For example, the pH needs to be 7-8, the aging temperature needs to be lower than the conventional aging temperature, and the calcination temperature on one hand needs to reach the formation temperature of γ-Al₂O₃, and on the other hand needs to prevent further violent decomposition of the ammonium bisulfate or ammonium nitrate. Therefore, for the ammonium sulfate, calcination is performed at 350-420°C; whereas for the ammonium nitrate, pre-decomposition is performed by calcining at 200-250°C for 1-2 hours to prevent explosion, after which the temperature is raised to 350-420°C.

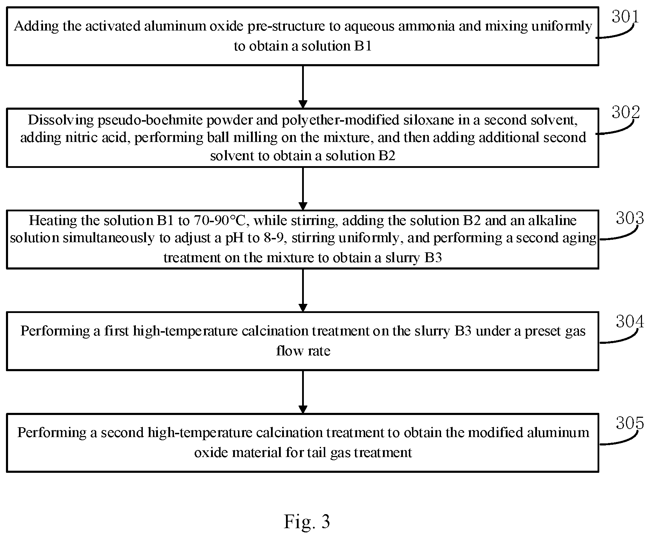

As shown in Fig. 3, in order to perform secondary growth on the activated aluminum oxide pre-structure, in S102, the secondary growth is performed on the activated aluminum oxide pre-structure MgO-BaO-Al₂O₃ to obtain the modified aluminum oxide material SiO₂-MgO-BaO-Al₂O₃ for tail gas treatment, which specifically comprises the following steps:
S301: The activated aluminum oxide pre-structure MgO-BaO-Al₂O₃ is added to the aqueous ammonia and mixed uniformly to obtain a solution B1.

After stirring, the mixture is ultrasonicated at 25-35°C for 30-60 minutes to obtain a uniformly mixed solution B1.

The mass fraction of the aqueous ammonia is 5-10 wt%, and the pH of the solution is adjusted using the aqueous ammonia.

When the activated aluminum oxide pre-structure MgO-BaO-Al₂O₃ is added to the aqueous ammonia, one or more of hydroxyethyl polyacrylate, hydroxypropyl methylcellulose, hydroxypropyl cellulose and polyvinyl alcohol are also added.

S302: Pseudo-boehmite powder and polyether-modified siloxane are dissolved in a second solvent, and nitric acid is added, and after ball milling for a period of time (for example, 0.5-1 h), additional second solvent is added to dilute the resulting viscous material in the sol state, thereby obtaining a solution B2.

The function of the nitric acid is to promote the formation of a pseudo-boehmite gel network.

The present application relates to a method for preparing aluminum oxide by the peptization method: taking advantage of the high peptization index of pseudo-boehmite and using an acid as the peptizing agent to prepare aluminum oxide. During the peptization process, H⁺ ions in the peptizing agent are adsorbed onto the pseudo-boehmite particles, forming new particles. Under the action of stirring or ball milling, the new particles continuously adsorb other pseudo-boehmite particles. A plurality of pseudo-boehmite particles are connected together in a network form through H⁺ ions acting as an "acidic bridge," causing the pseudo-boehmite particles to lose fluidity and the pseudo-boehmite solution to enter the peptized state. The pseudo-boehmite in the peptized state can then be calcined to obtain aluminum oxide.

The second solvent has a plurality of options and can be selected according to actual preparation requirements. For example, as an illustration, the second solvent comprises deionized water and/or distilled water.

The polyether-modified siloxane is one or more of polyether-modified polydimethylsiloxane, polyether-modified trisiloxane, and polyether-modified heptamethylsiloxane.

In S302, the amount of polyether-modified siloxane added can be back-calculated based on the content of Si in the final product, the modified aluminum oxide material SiO₂-MgO-BaO-Al₂O₃ for tail gas treatment.

In addition, it should be noted that the Al₂O₃ in the activated aluminum oxide pre-structure MgO-BaO-Al₂O₃ accounts for only a small proportion of the total Al₂O₃ in the final product, the modified aluminum oxide material SiO₂-MgO-BaO-Al₂O₃ for tail gas treatment. In other words, the contribution of Al₂O₃ in the activated aluminum oxide pre-structure MgO-BaO-Al₂O₃ to the Al₂O₃ in the final product is not high. The difference is provided by another source of Al₂O₃, namely pseudo-boehmite powder. Therefore, the amount of pseudo-boehmite powder added can be back-calculated from these two sources.

It should be noted that S301 and S302 do not have a strict chronological order, that is, S301 and S302 can be carried out simultaneously, or the solution B2 can be prepared first followed by the preparation of the solution B1.

S303: The solution B1 is heated to 70-90°C, and while being stirred, the solution B2 and an alkaline solution are simultaneously added to adjust the pH to 8-9, and the resulting mixture is stirred uniformly, and a second aging treatment is performed on the mixture to obtain a slurry B3.

The second aging treatment comprises aging at 40-60°C for 3-5 hours.

During the addition of the solution B2, ultrasonic dispersion is preferably applied.

S304: A first high-temperature calcination treatment is performed on the slurry B3 under a preset gas flow rate.

Before the step of performing the first high-temperature calcination treatment on the slurry B3, the method further comprises drying at 100-120°C.

The first high-temperature calcination treatment comprises calcining at 300-500°C for 1-2 hours.

The preset gas flow rate is 50-250 L/min.

S305: A second high-temperature calcination treatment is performed to obtain the modified aluminum oxide material SiO₂-MgO-BaO-Al₂O₃ for tail gas treatment.

The second high-temperature calcination treatment comprises calcining at 600-800°C for 2-5 hours.

Before performing the secondary growth, the activated aluminum oxide pre-structure is first ground into powder with a suitable particle size to provide an appropriate growth substrate for the secondary growth, and the resulting powder is then uniformly dispersed in the aqueous ammonia solution by ultrasonic treatment. In order to introduce Si doping for modification while avoiding the introduction of organic solvents during the preparation process, polyether-modified siloxane is added to pseudo-boehmite for modification in the present application. Avoiding the introduction of organic solvents not only makes the material preparation process more environmentally friendly, but also facilitates the secondary growth of the activated aluminum oxide in the aqueous activated aluminum oxide pre-structure system, preventing phase separation. In order to enable the Si-doped activated aluminum oxide to uniformly perform secondary growth on the surface of the activated aluminum oxide pre-structure particles and to prevent aggregation of the pre-structure particles, one or more of hydroxyethyl polyacrylate, hydroxypropyl methyl cellulose, hydroxypropyl cellulose, and polyvinyl alcohol are preferably added to the aqueous ammonia solution when the activated aluminum oxide pre-structure powder is added, so as to regulate the viscosity of the solution. Ultrasonic dispersion is applied during the secondary growth process to further promote uniform growth and dispersion of the particles.

The calcination process proposed in the present application is similar to conventional calcination processes, and its main purpose is to fully convert pseudo-boehmite into γ-Al₂O₃. The difference lies in the following: for ammonium sulfate, the unconverted ammonium sulfate and the generated ammonium bisulfate are further decomposed during the process to produce gases such as ammonia, nitrogen, sulfur dioxide, and water vapor; and for ammonium nitrate, the unconverted ammonium nitrate is further decomposed during the process to produce gases such as ammonia, nitrogen, and water vapor. In order to prevent non-uniform diffusion and local accumulation of gases, the gas flow rate needs to be controlled at 300-500°C. Proper control of the gas flow rate can, on the one hand, allow the diffusing gases to form a porous structure in the aluminum oxide material, further increasing the specific surface area, and on the other hand, ensure that waste gases such as sulfur dioxide are removed from the system, preventing their retention from poisoning the noble metal catalyst during the preparation of the coating slurry.

The embodiment of the present application further provides a modified aluminum oxide material for tail gas treatment, which is prepared by the preparation method of the modified aluminum oxide material for tail gas treatment according to any one of the foregoing methods.

The embodiment of the present application further provides a three-way catalyst, which comprises the modified aluminum oxide material for tail gas treatment as described above. The three-way catalyst further comprises a cerium-zirconium-based oxygen storage material, an additive material, and at least one noble metal selected from Pt, Pd, and Rh.

The present application is described in detail below with reference to several embodiments and comparative embodiments.

### Characterization Methods

### 1. Specific Surface Area Characterization

The specific surface area of the modified aluminum oxide material samples of each embodiment and comparative embodiment is characterized both in the freshly prepared state (before aging) and after high-temperature aging at 1100°C (after aging). The specific surface area is measured as follows: first, the sample is pretreated under vacuum at 300 °C for 3 h, then high-purity N₂ is used as the adsorptive gas for adsorption testing at -196 °C (liquid nitrogen) and desorption testing at 25 °C. The specific surface area of the sample is calculated using the BET method (Autosorb SI fully automatic surface area and pore size analyzer, Quantachrome). Specific Surface Area Retention (%) = Specific Surface Area After Aging/Specific Surface Area Before Aging * 100%.

### 2. Anti-shedding Performance Characterization

First, a coating slurry of the three-way catalyst is prepared according to the present application. In order to better evaluate the anti-shedding performance of the coating material under actual application conditions, such as high and low temperatures and mechanical impact, two methods, ultrasonic vibration and thermal shock, are employed to assess the adhesion strength of the coating layer. Shedding Rate = (Mass After Coating - Mass After Testing) / (Mass After Coating - Mass Before Coating)*100%.

### (1) Ultrasonic Vibration

The sample coated with the three-way catalyst coating material is placed in a sealed container containing petroleum ether, and ultrasonic treatment is performed on the container in an ultrasonic cleaner for 30 minutes, after which the sample is removed, dried, weighed, and the shedding rate is calculated.

### (2 ) Thermal Shock

The sample coated with the three-way catalyst coating material is placed in a muffle furnace at 1000°C for 20 minutes, then removed and rapidly immersed in cold water at 0-10°C, and ultrasonic treatment is performed on the sample for no more than 1 minute to promote separation of the detached material, with this process being repeated a plurality of times until the mass no longer decreases, after which the sample is weighed and the shedding rate is calculated.

### Embodiment 1

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O and Ba(NO₃)₂ such that the contents of MgO and BaO in MgO-BaO-Al₂O₃ are 1 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 25°C for 2 h to obtain a slurry A2;
S2: spray-drying the slurry A2 at 80°C, performing low-temperature calcination at 350 °C for 3 h, and grinding the calcined sample to a particle size of D₉₀ = 10 µm to obtain a P powder (MgO-BaO-Al₂O₃);
S3: adding the P powder prepared in S2 into an aqueous ammonia solution with a mass fraction of 10 wt%, stirring, and performing ultrasonic treatment at 25 °C for 60 min to prepare a solution B1;and weighing pseudo-boehmite powder corresponding to an Al₂O₃ content of 90 g, measuring a polyether-modified polydimethylsiloxane solution according to a molar ratio of Si to Mg of 6:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

### Embodiment 2

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O and Ba(NO₃)₂ such that the contents of MgO and BaO in MgO-BaO-Al₂O₃ are 4 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 25°C for 2 h to obtain a slurry A2;
S2: spray-drying the slurry A2 at 80°C, performing low-temperature calcination at 350 °C for 3 h, and grinding the calcined sample to a particle size of D₉₀ = 10 µm to obtain a P powder (MgO-BaO-Al₂O₃);
S3: adding the P powder prepared in S2 into an aqueous ammonia solution with a mass fraction of 10 wt%, stirring, and performing ultrasonic treatment at 25 °C for 60 min to prepare a solution B1;and weighing pseudo-boehmite powder corresponding to an Al₂O₃ content of 90 g, measuring a polyether-modified polydimethylsiloxane solution according to a molar ratio of Si to Mg of 3:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

### Embodiment 3

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O and Ba(NO₃)₂ such that the contents of MgO and BaO in MgO-BaO-Al₂O₃ are 1 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 25°C for 2 h to obtain a slurry A2;
S2: spray-drying the slurry A2 at 80°C, performing low-temperature calcination at 350 °C for 3 h, and grinding the calcined sample to a particle size of D₉₀ = 10 µm to obtain a P powder (MgO-BaO-Al₂O₃);
S3: adding the P powder prepared in S2 into an aqueous ammonia solution with a mass fraction of 10 wt%, adding hydroxyethyl polyacrylate, stirring, and performing ultrasonic treatment at 25 °C for 60 min to prepare a solution B1;and weighing pseudo-boehmite powder corresponding to an Al₂O₃ content of 90 g, measuring a polyether-modified polydimethylsiloxane solution according to a molar ratio of Si to Mg of 6:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

### Embodiment 4

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O and Ba(NO₃)₂ such that the contents of MgO and BaO in MgO-BaO-Al₂O₃ are 4 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 30°C for 4 h to obtain a slurry A2;
S2: spray-drying the slurry A2 at 80°C, performing low-temperature calcination at 420 °C for 1 h, and grinding the calcined sample to a particle size of D₉₀ = 15 µm to obtain a P powder (MgO-BaO-Al₂O₃);
S3: adding the P powder prepared in S2 into an aqueous ammonia solution with a mass fraction of 10 wt%, adding hydroxyethyl polyacrylate, stirring, and performing ultrasonic treatment at 25 °C for 60 min to prepare a solution B1;and weighing pseudo-boehmite powder corresponding to an Al₂O₃ content of 50 g, measuring a polyether-modified polydimethylsiloxane solution according to a molar ratio of Si to Mg of 3:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 60 °C for 5 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

### Comparative Embodiment 1

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O and Ba(NO₃)₂ such that the contents of MgO and BaO in MgO-BaO-Al₂O₃ are 1 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 50°C for 2 h to obtain a slurry A2;
S2: spray-drying the slurry A2 at 80°C, performing calcination at 600 °C for 3 h, and grinding the calcined sample to a particle size of D₉₀ = 10 µm to obtain a P powder (MgO-BaO-Al₂O₃);
S3: adding the P powder prepared in S2 into an aqueous ammonia solution with a mass fraction of 10 wt%, stirring, and performing ultrasonic treatment at 25 °C for 60 min to prepare a solution B1; and weighing pseudo-boehmite powder corresponding to an Al₂O₃ content of 90 g, measuring a polyether-modified polydimethylsiloxane solution according to a molar ratio of Si to Mg of 12:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

### Comparative Embodiment 2

A preparation method of a modified aluminum oxide material for tail gas treatment, comprising:
S1: weighing 33.48 g of Al(NO₃)₃·9H₂O (containing about 10 g of Al₂O₃); weighing Mg(NO₃)₂·6H₂O and Ba(NO₃)₂ such that the contents of MgO and BaO in MgO-BaO-Al₂O₃ are 1 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 25°C for 2 h to obtain a slurry A2;
S2: spray-drying the slurry A2 at 80°C, performing low-temperature calcination at 350 °C for 3 h, and grinding the calcined sample to a particle size of D₉₀ = 10 µm to obtain a P powder (MgO-BaO-Al₂O₃);
S3: adding the P powder prepared in S2 into an aqueous ammonia solution with a mass fraction of 10 wt%, stirring, and performing ultrasonic treatment at 25 °C for 60 min to prepare a solution B1; and weighing pseudo-boehmite powder corresponding to an Al₂O₃ content of 90 g, measuring a polyether-modified polydimethylsiloxane solution according to a molar ratio of Si to Mg of 6:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

### Comparative Embodiment 3

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O such that the content of MgO in MgO-Al₂O₃ is 1 wt%, dissolving the corresponding soluble salt in deionized water to prepare a solution A1, adding aqueous ammonia dropwise to the uniformly mixed solution to adjust the pH to 7, and stirring uniformly and aging at 25°C for 2 h to obtain a slurry A2;
S2: spray-drying the slurry A2 at 80°C, performing low-temperature calcination at 350 °C for 3 h, and grinding the calcined sample to a particle size of D₉₀= 10 µm to obtain a P powder (MgO-Al₂O₃);
S3: adding the P powder prepared in S2 into an aqueous ammonia solution with a mass fraction of 10 wt%, stirring, and performing ultrasonic treatment at 25 °C for 60 min to prepare a solution B1; and weighing pseudo-boehmite powder corresponding to an Al₂O₃ content of 90 g, measuring a polyether-modified polydimethylsiloxane solution according to a molar ratio of Si to Mg of 6:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material for tail gas treatment (SiO₂-MgO-Al₂O₃).

### Comparative Embodiment 4

A preparation method of a modified aluminum oxide material for tail gas treatment, comprising:
S1: weighing 33.48 g of Al(NO₃)₃·9H₂O (containing about 10 g of Al₂O₃) and 3.35 g of (NH₄)₂SO₄, weighing Mg(NO₃)₂·6H₂O and Ba(NO₃)₂ such that the contents of MgO and BaO in MgO-BaO-Al₂O₃ are 1 wt% and 2 wt% respectively, dissolving the corresponding soluble salts in deionized water to prepare a solution A1, adding aqueous ammonia dropwise to the uniformly mixed solution to adjust the pH to 7, and stirring uniformly and aging at 25°C for 2 h to obtain a slurry A2;
S2: spray-drying the slurry A2 at 80°C, performing low-temperature calcination at 350 °C for 3 h, and grinding the calcined sample to a particle size of D₉₀ = 10 µm to obtain a P powder (MgO-BaO-Al₂O₃);
S3: adding the P powder prepared in S2 into an aqueous ammonia solution with a mass fraction of 10 wt%, adding hydroxyethyl polyacrylate, stirring, and performing ultrasonic treatment at 25 °C for 60 min to prepare a solution B1;and weighing pseudo-boehmite powder corresponding to an Al₂O₃ content of 90 g, measuring a polyether-modified polydimethylsiloxane solution according to a molar ratio of Si to Mg of 8:1, dissolving in deionized water and adding nitric acid, performing ball milling twice for 1 h, and then adding an additional amount of deionized water to prepare a solution B2;
S4: heating the solution B1 to 70 °C, adding the solution B2 to the solution B1 while stirring, performing ultrasonic dispersion during the addition of the solution B2, adjusting the pH of the slurry to 8 through adding the aqueous ammonia, stirring uniformly, and aging at 40 °C for 3 h; and
S5: drying the slurry obtained from S4 at 100 °C, performing calcination at 400 °C for 2 h with a gas flow rate maintained at 200 L/min, and then performing calcination at 800 °C for 4 h to obtain the modified aluminum oxide material SiO₂-MgO-BaO-Al₂O₃ for tail gas treatment.

**Table 1 Performance Indicators of Modified Aluminum Oxide Materials Prepared in Embodiments and Comparative Embodiments**

| | Specific Surface Area Before Aging (m²/g) | Specific Surface Area After Aging (m²/g) | Shedding Rate Under Ultrasonic Vibration (%) | **Shedding** Rate Under Thermal Shock (%) (%) |
|---|---|---|---|---|
| Embodiment 1 | 265 | 162 | 1.1 | 0.8 |
| Embodiment 2 | 268 | 164 | 1.2 | 0.7 |
| Embodiment 3 | 271 | 179 | 0.9 | 0.8 |
| Embodiment 4 | 272 | 184 | 1.2 | 0.6 |
| Comparative Embodiment 1 | 255 | 121 | 4.1 | 3.8 |
| Comparative Embodiment 2 | 213 | 95 | 2.1 | 1.1 |
| Comparative Embodiment 3 | 245 | 102 | 1.8 | 1.4 |
| Comparative Embodiment 4 | 260 | 113 | 2.0 | 2.8 |

As can be seen from the data in Table 1, the aluminum oxide materials prepared in the embodiments exhibit very high specific surface areas and very low shedding rates, while the attenuation degree after high-temperature aging is also relatively low.

Compared with the embodiment 1, the difference in the embodiment 3 is the addition of the hydroxyethyl polyacrylate. The specific surface area after aging is also higher than that without the addition of the hydroxyethyl polyacrylate, and the shedding rate under ultrasonic vibration is lower than that without the addition of the hydroxyethyl polyacrylate, indicating that adding the hydroxyethyl polyacrylate, hydroxypropyl methylcellulose, hydroxypropyl cellulose, or polyvinyl alcohol when introducing the activated aluminum oxide pre-structure MgO-BaO-Al₂O₃ into the aqueous ammonia can adjust the viscosity of the solution, thereby promoting uniform growth and dispersion of the particles.

Compared with the embodiment 2, the difference in the embodiment 4 is the addition of the hydroxyethyl polyacrylate. The specific surface area after aging is also higher than that without the addition of the hydroxyethyl polyacrylate, and the shedding rate under thermal shock is lower than that without the addition of the hydroxyethyl polyacrylate, indicating that adding the hydroxyethyl polyacrylate, hydroxypropyl methylcellulose, hydroxypropyl cellulose, or polyvinyl alcohol when introducing the activated aluminum oxide pre-structure MgO-BaO-Al₂O₃ into the aqueous ammonia can adjust the viscosity of the solution, thereby promoting uniform growth and dispersion of the particles.

Compared with the embodiment 1, the difference in the comparative embodiment 1 is that the molar ratio of Si to Mg is 12:1, and the calcination temperature in S2 is 600 °C. At this point, the molar ratio of Si to Mg in the comparative embodiment 1 exceeds (3~7.5):1, resulting in a significant decrease in the specific surface area after aging and a substantial increase in the shedding rate, indicating that controlling the molar ratio of Si to Mg within (3~7.5):1 can produce a modified aluminum oxide material with high-temperature resistance and high specific surface area even without doping rare earth oxides. At the same time, the anti-shedding performance of the three-way catalyst coating layer can be significantly improved.

Compared with the embodiment 1, the difference in the comparative embodiment 2 is the absence of ammonium sulfate. At this point, the specific surface area after aging decreases significantly, and the shedding rate increases substantially, indicating that the addition of ammonium sulfate, which gradually decomposes into gases during calcination, helps form a porous structure with high specific surface area, thereby enhancing the specific surface area of the aluminum oxide material.

Compared with the embodiment 1, the difference in the comparative embodiment 3 is the absence of barium nitrate. At this point, the specific surface area after aging decreases significantly, and the shedding rate increases substantially, indicating that an appropriate BaO content can enhance the aging resistance of the aluminum oxide material.

Compared with the embodiment 1, the difference in the comparative embodiment 4 is the addition of the hydroxyethyl polyacrylate and a molar ratio of Si to Mg of 8:1. At this point, the specific surface area after aging decreases significantly, and the shedding rate increases substantially; however, compared with the comparative embodiment 1, the shedding rate is relatively lower, indicating that adding the hydroxyethyl polyacrylate, hydroxypropyl methylcellulose, hydroxypropyl cellulose, or polyvinyl alcohol when introducing the activated aluminum oxide pre-structure MgO-BaO-Al₂O₃ into the aqueous ammonia can adjust the viscosity of the solution, thereby promoting uniform growth and dispersion of the particles, which is beneficial for reducing the shedding rate.

In summary, the aluminum oxide material for tail gas treatment provided in the present application can enhance the specific surface area and high-temperature resistance of the aluminum oxide, inhibit the phase transformation of γ-Al₂O₃ at high temperatures to improve the high-temperature aging resistance, and simultaneously improve the anti-shedding performance when used as a coating material. Moreover, the preparation method features a simple process flow and high production efficiency, allowing integration into existing aluminum oxide production lines. The gasoline engine tail gas treatment module based on this aluminum oxide material has very promising application prospects in the automotive tail gas treatment field.

In the description of the present application, it should be noted that the orientation or positional relationships indicated by terms such as "upper", "lower", etc., are based on the orientations or positional relationships shown in the drawings, and are used solely for the convenience of describing the present application and simplifying the description. These terms do not indicate or imply that the device or component referred to must have a specific orientation or be constructed and operated in a particular orientation. Therefore, these terms should not be understood as limiting the scope of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application can be understood according to specific circumstances.

It should be noted that relational terms such as "first" and "second" are only for distinguishing one entity or operation from another entity or operation in this the present invention, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present application, so that those skilled in the art can understand or implement the present application. For those skilled in the art, various modifications to these embodiments will be obvious, and the general principles defined herein can be implemented in other embodiments without departing from the spirit or scope of the present application. Therefore, the present application will not be limited to the embodiments shown in this document, but will be subject to the widest scope consistent with the principles and novel features applied herein.

## Claims

1. A preparation method of a modified aluminum oxide material for tail gas treatment, comprising:
performing primary growth on aluminum oxide to obtain an activated aluminum oxide pre-structure MgO-BaO-Al₂O₃; and
performing secondary growth on the activated aluminum oxide pre-structure MgO-BaO-Al₂O₃ to obtain a modified aluminum oxide material SiO₂-MgO-BaO-Al₂O₃ for tail gas treatment, wherein a molar ratio of Si to Mg in the modified aluminum oxide material SiO₂-MgO-BaO-Al₂O₃ for tail gas treatment is (3~7.5):1.

2. The preparation method of the modified aluminum oxide material for tail gas treatment according to claim 1, wherein
in the activated aluminum oxide pre-structure MgO-BaO-Al₂O₃, the content of MgO is 0.2-4.0 wt%, the content of BaO is 0.5-5.0 wt%, and Al₂O₃ accounts for 5-30 wt% of the total weight of Al₂O₃ in the modified aluminum oxide material SiO₂-MgO-BaO-Al₂O₃ for tail gas treatment.

3. The preparation method of the modified aluminum oxide material for tail gas treatment according to claim 1, wherein the step of performing primary growth on the aluminum oxide to obtain the activated aluminum oxide pre-structure MgO-BaO-Al₂O₃ specifically comprises the following steps:
dissolving a soluble aluminum salt, a soluble magnesium salt, a soluble barium salt and a soluble ammonium salt in a first solvent to prepare a solution A1;
adding an alkaline solution to the solution A1 dropwise to adjust a pH of the solution A1 to 7-8, stirring uniformly, and performing a first aging treatment on the mixture to obtain a slurry A2; and
performing a low-temperature calcination treatment on the slurry A2 and grinding to obtain the activated aluminum oxide pre-structure MgO-BaO-Al₂O₃.

4. The preparation method of the modified aluminum oxide material for tail gas treatment according to claim 3, wherein the amounts of the soluble aluminum salt, the soluble magnesium salt and the soluble barium salt added are as follows:
the molar ratio of Al³⁺, Mg²⁺ and Ba²⁺ is Al³⁺:Mg²⁺:Ba²⁺ = (90~95):(0.2~5):(0.1~2).

5. The preparation method of the modified aluminum oxide material for tail gas treatment according to claim 3, wherein
the soluble aluminum salt comprises one or more of aluminum nitrate, aluminum sulfate and aluminum chloride;
the soluble magnesium salt comprises one or more of magnesium nitrate, magnesium sulfate, magnesium acetate and magnesium chloride;
the soluble barium salt comprises one or more of barium nitrate, barium acetate and barium chloride;
the soluble ammonium salt comprises ammonium sulfate and/or ammonium nitrate; and
the alkaline solution comprises aqueous ammonia and/or ammonium carbonate.

6. The preparation method of the modified aluminum oxide material for tail gas treatment according to claim 3, wherein the first aging treatment comprises aging at 20-30°C for 2-4 hours.

7. The preparation method of the modified aluminum oxide material for tail gas treatment according to claim 3, wherein the low-temperature calcination treatment comprises calcining at 350-420°C for 1-3 hours.

8. The preparation method of the modified aluminum oxide material for tail gas treatment according to claim 3, wherein, before the step of performing the low-temperature calcination treatment on the slurry A2, the method further comprises drying the slurry A2 at 60-100°C.

9. The preparation method of the modified aluminum oxide material for tail gas treatment according to claim 8, wherein drying is performed in a spraying manner at 60-100°C.

10. The preparation method of the modified aluminum oxide material for tail gas treatment according to claim 3, wherein grinding is performed until a particle size D₉₀ of 5-15 µm is achieved.

11. The preparation method of the modified aluminum oxide material for tail gas treatment according to claim 1, wherein the step of performing secondary growth on the activated aluminum oxide pre-structure MgO-BaO-Al₂O₃ to obtain the modified aluminum oxide material SiO₂-MgO-BaO-Al₂O₃ for tail gas treatment specifically comprises the following steps:
adding the activated aluminum oxide pre-structure MgO-BaO-Al₂O₃ to aqueous ammonia and mixing uniformly to obtain a solution B1;
dissolving pseudo-boehmite powder and polyether-modified siloxane in a second solvent, adding nitric acid, performing ball milling on the mixture, and then adding additional second solvent to obtain a solution B2;
heating the solution B1 to 70-90°C, while stirring, adding the solution B2 and an alkaline solution simultaneously to adjust a pH to 8-9, stirring uniformly, and performing a second aging treatment on the mixture to obtain a slurry B3;
performing a first high-temperature calcination treatment on the slurry B3 under a preset gas flow rate; and
performing a second high-temperature calcination treatment to obtain the modified aluminum oxide material SiO₂-MgO-BaO-Al₂O₃ for tail gas treatment.

12. The preparation method of the modified aluminum oxide material for tail gas treatment according to claim 11, wherein the mass fraction of the aqueous ammonia is 5~10 wt%; and
the polyether-modified siloxane is one or more of polyether-modified polydimethylsiloxane, polyether-modified trisiloxane, and polyether-modified heptamethylsiloxane.

13. The preparation method of the modified aluminum oxide material for tail gas treatment according to claim 11, wherein when the activated aluminum oxide pre-structure MgO-BaO-Al₂O₃ is added to the aqueous ammonia, one or more of hydroxyethyl polyacrylate, hydroxypropyl methylcellulose, hydroxypropyl cellulose and polyvinyl alcohol are also added.

14. The preparation method of the modified aluminum oxide material for tail gas treatment according to claim 11, wherein the solution B2 is added while stirring under ultrasonic dispersion conditions.

15. The preparation method of the modified aluminum oxide material for tail gas treatment according to claim 11, wherein before the step of performing the first high-temperature calcination treatment on the slurry B3, the method further comprises drying the slurry B3 at 100-120°C.

16. The preparation method of the modified aluminum oxide material for tail gas treatment according to claim 11, wherein the second aging treatment comprises aging at 40-60°C for 3-5 hours.

17. The preparation method of the modified aluminum oxide material for tail gas treatment according to claim 11, wherein the first high-temperature calcination treatment comprises calcining at 300-500°C for 1-2 hours.

18. The preparation method of the modified aluminum oxide material for tail gas treatment according to claim 11, wherein the second high-temperature calcination treatment comprises calcining at 600-800°C for 2-5 hours.

19. The preparation method of the modified aluminum oxide material for tail gas treatment according to claim 11, wherein the preset gas flow rate is 50-250 L/min.

20. A modified aluminum oxide material for tail gas treatment, wherein the modified aluminum oxide material for tail gas treatment is prepared by the preparation method of the modified aluminum oxide material for tail gas treatment according to any one of claims 1 to 19.

21. A three-way catalyst, wherein the three-way catalyst comprises the modified aluminum oxide material for tail gas treatment according to claim 20.
